# EUROPEAN PATENT APPLICATION

(11) **EP 2 026 583 A2**
(43) Date of publication of application: **18.02.2009**
(21) Application number: 08018821.2
(22) Date of filing: 27.12.2002
(51) Int. Cl.: H04N 7/26, H04N 7/50

(54) **Motion picture encoding and decoding apparatus**

(30) Priority: 07.01.2002 JP 2002000516
(62) Divisional of application: 02792070.1
(71) Applicant: Mitsubishi Denki Kabushiki Kaisha, Chiyoda-ku Tokyo, 100-8310 (JP)
(72) Inventor: Yamada, Yoshihisa, Tokyo 100-8310 (JP); Moriya, Yoshimi, Tokyo 100-8310 (JP); Sugimoto, Kazuo, Tokyo 100-8310 (JP); Asai, Kohtaro, Tokyo 100-8310 (JP)
(74) Representative: Pfenning, Meinig & Partner GbR

(57) **Abstract**

A motion picture encoding apparatus for encoding a motion picture signal includes a plurality of transform units for different transform schemes, and a transform scheme control unit for selecting, from the plurality of the transform units, the transform unit for the transform scheme adapted to the motion picture signal.

## Description

The present invention relates to a motion picture encoding apparatus for compressing a motion picture signal for transmission and a motion picture decoding apparatus for expanding the compressed motion picture signal for reproduction.

### BACKGROUND ART

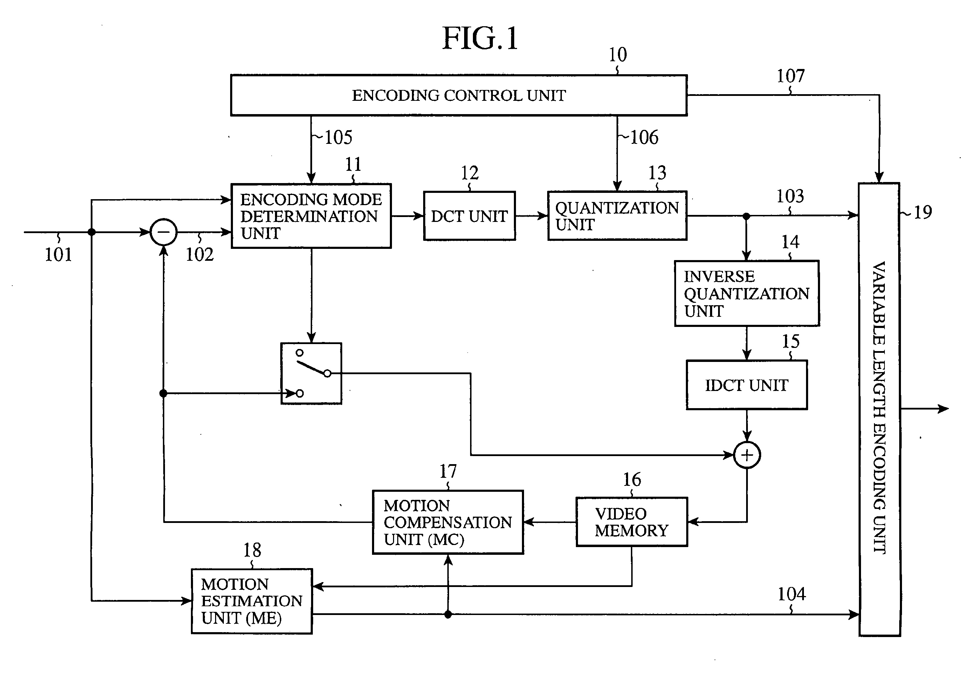

Fig. 1 is a block diagram showing a construction of a related-art motion picture encoding apparatus shown, for example, in the International Standard ISO/IEC 13818-2 (also known as MPEG-2 video part). The encoding apparatus comprises an encoding control unit 10, an encoding mode determination unit 11, a DCT unit 12, a quantization unit 13, an inverse quantization unit 14, an inverse DCT unit 15, a video memory 16, a motion compensation unit 17, a motion estimation unit 18 and a variable length encoding unit 19.

A description will now be given of the operation according to the related art. A difference between an input motion picture signal 101 and a motion compensated prediction signal described later is computed so that a resultant prediction error signal is input to the encoding mode determination unit 11. The encoding mode determination unit 11 selects an intra-coding mode for subjecting the input motion picture signal 101 to an encoding process or an inter-coding mode for subjecting the prediction error signal 102 to an encoding process, so as to output the signal according to the selection. The output signal is subject to transformation from the space-domain to the frequency-domain, using DCT, which is a type of orthogonal transform. A transform coefficient is quantized in the quantization unit 13 which outputs a quantization coefficient 103.

The quantization coefficient 103 is subjected to inverse quantization in the inverse quantization unit 14 and to inverse DCT in the inverse DCT unit 15 so as to be transformed back into a space-domain signal. When the inter-coding mode is selected, the resultant signal is added to the motion compensated prediction signal to produce a locally decoded image signal, which is then stored in the video memory 16. The motion estimation unit 18 receives the locally decoded picture signal stored in the video memory 16 and the input image signal 101 so as to detect a motion vector 104. The motion compensation unit 17 generates a motion compensated prediction signal from the motion vector 104 and the locally decoded image signal.

The encoding control unit 10 controls the encoding mode determination unit 11 using an encoding mode determination signal 105. The frequencies of the intra-coding mode and the inter-coding mode are controlled according to the status (for example, the volume of codes generated) of the encoding process already performed or the characteristics of the input image signal. The encoding control unit 10 controls the level of precision of the quantization process performed in the quantization unit 13, using a quantization parameter 106.

The variable length coding unit 19 encodes and multiplexes the quantization coefficient 103, the motion vector 104, and the information 107 generated by the encoding control unit 10 and including the encoding mode determination signal and the quantization parameter.

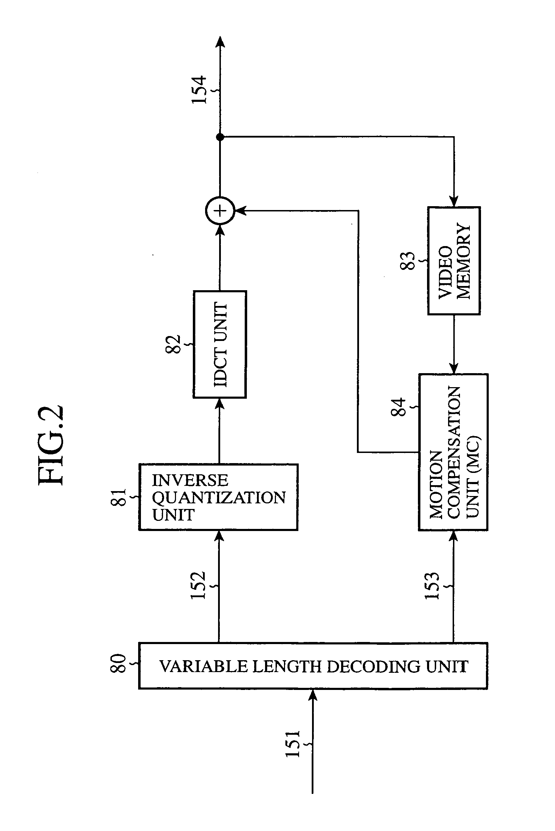

Fig. 2 is a block diagram showing a construction of a motion picture decoding apparatus for receiving encoded data output from the motion picture encoding apparatus of Fig. 1 so as to obtain a decoded motion picture signal. The motion picture decoding apparatus comprises a variable length decoding unit 80, an inverse quantization unit 81, an inverse DCT unit 82, a video memory 83 and a motion compensation unit 84.

A description will now be given of the operation of the decoding apparatus according to the related art. Input coded data 151 are subject to variable length decoding in the variable length decoding unit 80. The operation of the unit 80 is the reverse of the operation of the variable length encoding unit 19 of the encoding apparatus. The quantization coefficient 152 thus decoded is subject to inverse quantization in the inverse quantization unit 81 and to inverse DCT in the inverse DCT unit 82 so as to be transformed into a space-domain signal. When the transformed signal indicates an inter-coding mode, the signal is added to the motion compensated prediction signal subjected to motion compensation using a motion vector 153, with the result that a decoded image signal 154 is obtained. The decoded image signal 154 is stored in the video memory 83.

The related-art motion picture encoding apparatus and the motion picture decoding apparatus constructed as described above invariably use DCT as a motion picture encoding scheme for transformation of an image signal from the space domain into the frequency domain. Thus, there is a problem in that the quality of compression is insufficient when a signal not adapted to DCT transform characteristics is input. Another problem is that, with a related-art combination of DCT and quantization, lossless encoding, in which a coding error is zero, is virtually impossible.

The present invention has been developed with a view to solving the above-mentioned problems and has an objective of providing an image encoding apparatus in which it is possible to select a transform scheme to enable an encoding process most suitable for the characteristics of an image signal, and in which it is possible to change a scheme for quantization and variable-length encoding in association with the selection of a transform scheme.

Another objective of the present invention is to provide an image encoding apparatus capable of adaptive lossless encoding for near-perfect restoration, through expansion, of an original image signal subjected to compression.

Another objective of the present invention is to provide a motion picture decoding apparatus capable of decoding an encoded produced in an image encoding apparatus according to the present invention.

### DISCLOSURE OF THE INVENTION

A motion picture encoding apparatus according to the present invention for producing encoded data by compressing a motion picture signal comprises: a plurality of transform units for encoding the motion picture signal using different transform schemes; and a transform scheme control unit for selecting, from the plurality of transform units, the transform unit for the transform scheme adapted to the motion picture signal.

Accordingly, it is possible to perform an optimal encoding process using a transform scheme most suitable for the characteristics of an image signal.

A motion picture decoding apparatus according to the present invention for decoding compressed, encoded data to restore a motion picture signal, comprises: a plurality of inverse transform units for decoding the motion picture signal using different transform schemes; and an inverse transform scheme control unit for selecting, from said plurality of inverse transform units, the inverse transform unit for the transform scheme adapted to the motion picture signal subject to decoding, in accordance with the encoded data.

Accordingly, adaptive lossless encoding for near-perfect restoration of an original image signal from encoded data is enabled.

A motion picture encoding apparatus according to the present invention may further comprise: a variable length encoding unit for including, in the encoded data, a flag indicating the transform scheme of the selected transform unit.

Accordingly, it is possible for a decoding apparatus to decode encoded data using a proper transform scheme, based on a flag retrieved in the decoding apparatus.

A motion picture decoding apparatus according to the present invention may further comprise: a variable length decoding unit for retrieving, from the encoded data, a flag for selection of the transform scheme, wherein said inverse transform scheme control unit selects, from said plurality of inverse transform units, the inverse transform unit for the transform scheme adapted to the motion picture signal subject to decoding, in accordance with the retrieved flag.

Accordingly, it is possible to decode encoded data by using the same transform scheme as used in the motion picture encoding apparatus, based on a flag retrieved in the decoding apparatus.

The transform scheme control unit may select, from said plurality of transform units, the transform unit for the transform scheme adapted to the motion picture signal, using information included in the encoded data.

Accordingly, it is possible to eliminate the need for transmission of a flag indicating a transform scheme being used to a decoding apparatus or to reduce the frequency of transmission.

The inverse transform scheme control unit may select, from said plurality of inverse transform units, the inverse transform unit for the transform scheme adapted to the image signal subject to decoding, using information included in the encoded data.

Accordingly, it is possible for a decoding apparatus to select a transform scheme from information contained in the encoded data without using a flag.

The information included in the encoded data may be a quantization parameter.

Accordingly, it is possible for a motion picture decoding apparatus to select the same transform scheme as selected in the motion picture encoding apparatus using quantization parameter information.

The information included in the encoded data may be the intra-coding mode and the inter-coding mode for macroblock encoding.

Accordingly, it is possible for a motion picture decoding apparatus to select the same transform scheme as selected in the motion picture encoding apparatus using macroblock encoding mode information.

The information included in the encoded data may be motion vector count for motion compensated prediction for a macroblock.

Accordingly, it is possible for a motion picture decoding apparatus to select the same transform scheme selected in the motion picture encoding apparatus using a motion vector count for a macroblock.

The transform scheme control unit may store a history of transform schemes selected in the past and select, from said plurality of transform units, the transform unit for the transform scheme adapted to the motion picture signal, in accordance with the history.

Accordingly, the frequency of transmission of a flag indicating a transform scheme to a motion picture decoding apparatus is significantly reduced so that a required code volume is reduced accordingly.

The inverse transform scheme control unit may store a history of transform schemes selected in the past and select, from said plurality of inverse transform units, the inverse transform unit for the transform scheme adapted to the motion picture signal subject to decoding, in accordance with the history.

Accordingly, it is possible to select the same transform scheme selected in the motion picture encoding apparatus.

A motion picture encoding apparatus according to the present invention may further comprise: a quantization unit for a quantization process adapted to the selected transform unit; and a variable length encoding unit for including, in the encoded data, a flag indicating the transform scheme of the selected transform unit.

Accordingly, the coding efficiency is improved by performing a quantization process adapted to a transform scheme in addition to selecting a transforming scheme.

A motion picture decoding apparatus according to the present invention may further comprise: a variable length decoding unit for retrieving, from the encoded data, a flag for selection of the transform scheme; and a plurality of inverse quantization units, wherein said inverse transform scheme control unit may select, from said plurality of inverse quantization units, the inverse quantization unit adapted to the motion picture signal subject to decoding, in accordance with the retrieved flag.

Accordingly, it is possible to decode encoded data properly using the same inverse quantization scheme as used in a motion picture encoding apparatus, by switching between inverse quantization schemes in accordance with a transform scheme, in addition to switching between inverse transform schemes.

A motion picture encoding apparatus according to the present invention may further comprise: a variable length encoding unit for including, in the encoded data, a flag indicating the transform scheme of the selected transform unit and for performing a variable length encoding process adapted for the selected transform scheme.

Accordingly, the coding efficiency is improved by selecting a variable length encoding scheme adapted to a transform scheme in addition to selecting a transforming scheme.

A motion picture decoding apparatus according to the present invention may further comprise: a variable length decoding unit for retrieving, from the encoded data, a flag for selection of the transform scheme and for performing a variable length decoding process adapted for the retrieved flag.

Accordingly, it is possible to decode encoded data properly, by switching between variable length decoding schemes, in addition to switching between inverse transform schemes.

### BRIEF DESCRIPTION OF THE DRAWINGS

Fig. 1 is a block diagram showing a construction of a motion picture encoding apparatus according to the related art.
Fig. 2 is a block diagram showing a construction of a motion picture decoding apparatus according to the related art.
Fig. 3 is a block diagram showing a construction of an image encoding apparatus according to a first embodiment of the present invention.
Fig. 4 is a block diagram showing a construction of an image encoding apparatus according to a second embodiment of the present invention.
Fig. 5 is a block diagram showing an image encoding apparatus according to a third embodiment of the present invention.
Fig. 6 illustrates how a scanning process is performed in variable length encoding.
Fig. 7 is a block diagram showing a construction of a motion picture decoding apparatus according to a fifth embodiment of the present invention.
Fig. 8 is a block diagram showing a construction of a motion picture decoding apparatus according to a sixth embodiment of the present invention.

### BEST MODE FOR CARRYING OUT THE INVENTION

A description will now be given of the best mode for carrying out the invention with reference to the attached drawings.

### First embodiment

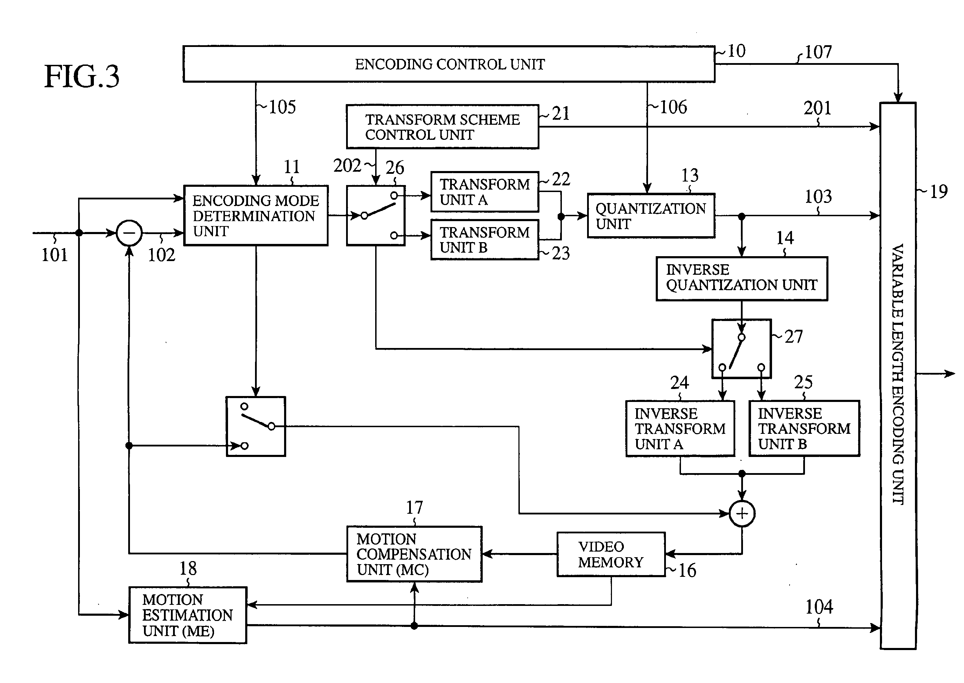

Fig. 3 is a block diagram showing a construction of an image encoding apparatus according to a first embodiment of the present invention.

Referring to Fig. 3, the image encoding apparatus comprises a transform scheme control unit 21, a first transform unit A 22, a second transform unit B 23, a first inverse transform unit A 24, a second inverse transform unit B 25, a switch 26 for selecting either the transform units A 22 or the transform unit B 23, and a switch 27 for selecting either the inverse transform unit A 24 or the inverse transform unit B 25. The other components are identical to the corresponding components of the related art shown in Fig. 1. Blocks with like numerals have like functions and perform like operations.

A description will now be given of the operation according to the first embodiment. The transform scheme control unit 21 controls the switch 26 using a signal 202, so as to use either the transform unit A 22 or the transform unit B 23 for transforming a signal output from the encoding mode determination unit 11 from a space domain signal into a frequency domain signal.

The transform scheme control unit 21 controls the switch 27 so that the reverse of the selected transform is performed to subject the inverse-quantized coefficient to inverse transform.

The transform scheme control unit 21 outputs, to the variable length encoding unit 19, a transform scheme selection flag 201 indicating whether the transform scheme control unit 21 selected the transform unit A 22 or the transform unit B 23 for an encoding process. The transform scheme selection flag 201 is encoded and multiplexed with encoded data such as the quantization coefficient 103 and the motion vector 104 before being output.

A description will now be given of a method of control in the transform scheme control unit 21. In the first embodiment, the transform scheme selection flag 201 indicating which of the schemes is being selected is output as encoded data. With this, it is possible to switch between transform schemes at a desired point of time and for desired units. For example, when outputting encoded data with a layered structure such as the MPEG-2 video bit stream syntax, it is possible to switch between transform schemes sequence by sequence by multiplexing the transform scheme selection flag 201 into a sequence header. Similarly, it is possible to switch between transform schemes for respective GOPs by multiplexing the transform scheme selection flag into a Group of Picture (GOP) header; for respective pictures by multiplexing into a picture header; for respective slices by multiplexing into a slice header, and for respective macroblocks by multiplexing into a portion of a macroblock type.

According to such control, it is possible to select a transform scheme for respective motion picture sequences, GOPs, pictures, slices and macroblocks. Thus, an encoding process most suitable for an image signal is performed.

Thus, according to the motion picture encoding apparatus of the first embodiment, it is possible to select a transform scheme adapted to the characteristics of an image signal for an optimal encoding process, by allowing the transform scheme control unit 21 to use either the transform unit A 22 or the transform unit B 23 for transform.

By allowing the transform scheme control unit 21 to output the transform scheme selection flag 201, indicating which of the transform unit A 22 or the transform unit B 23 is being selected for encoding, to the variable length encoding unit 19, and by encoding the transform scheme selection flag 201 and multiplexing the encoded flag with coded data including the quantization coefficient 103 and the motion vector 104, the decoding apparatus receiving the coded data is capable of properly decoding the coded data based on the transform scheme selection flag 201.

Instead of encoding the transform scheme selection flag 201 and multiplexing the encoded flag with coded data including the quantization coefficient 103 and the motion vector 104 for output, the transform scheme control unit 21 may transmit the transform scheme selection flag 201 in a separate layer. For example, the flag may be transmitted during a session (as defined in the ITU-T Standard H.242 and H.245) in which information related to the capabilities of a communication terminal is exchanged at the start of communication, so that a transform scheme is established. Alternatively, the transform scheme may be stored in a storage medium (such as a tape or a disk) so that, when coded data are reproduced from the medium, the scheme may be selectively used by a manual operation when a reproduction is started. The recorded scheme may also be read out for automatic switching between the schemes. It is to be noted that these alternatives are also available in the following embodiments.

### Second embodiment

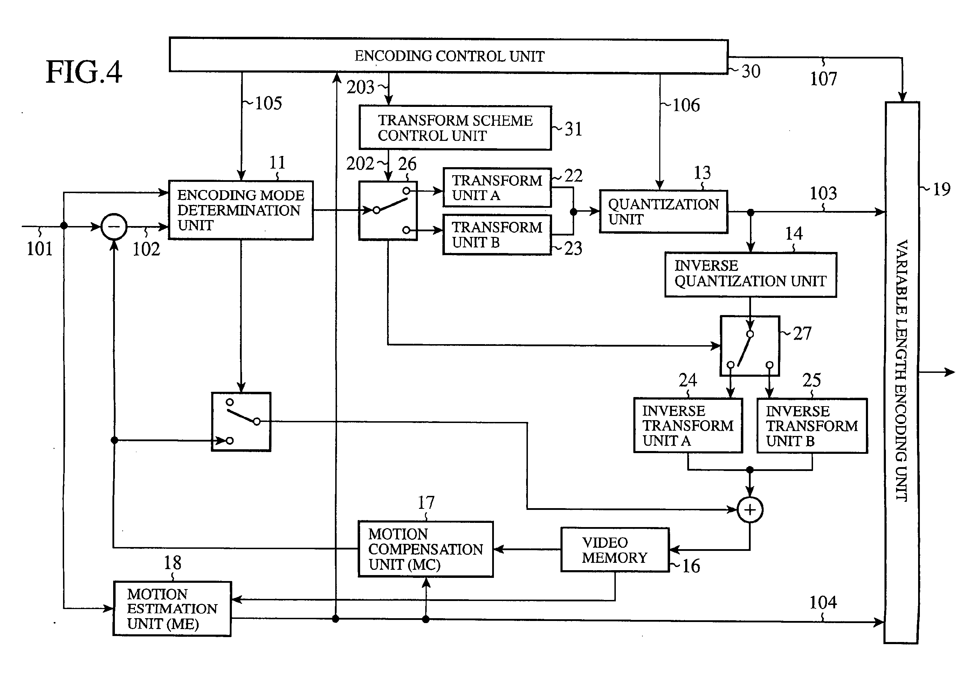

Fig. 4 is a block diagram showing a construction of an image encoding apparatus according to a second embodiment of the present invention. Referring to Fig. 4, a difference from the first embodiment is that a transform scheme control unit 31 operates in accordance with a signal from an encoding control unit 30. With this, transmission of the transform scheme selection flag 201 to a decoding apparatus, required in the first embodiment, is unnecessary or the frequency of transmission is reduced.

A description will now be given of the operation of the encoding control unit 30 and the transform scheme control unit 31 according to the second embodiment. The transform scheme control unit 31 controls the switches 26 and 27 in accordance with a signal 203 from the encoding control unit 30. Some examples will be given below of how the transform scheme control unit 31 controls the operation based on the signal 203 from the encoding control unit 30.

### (1) Control based on the quantization parameter 106

The encoding control unit 30 uses the signal 203 to direct the transform scheme control unit 31 to select the transform scheme A when the quantization parameter 106 for controlling the quantization unit 13 is smaller than a threshold level and select the transform scheme B when the quantization parameter 106 is larger than the threshold level. The transform scheme control unit 31 receiving the signal outputs the signal 202 for controlling the switch 26. Such control described above enables the selection of a transform process adapted to the level of precision of quantization. In this control, the quantization parameter 106 contained in the information 107 encoded by the variable length encoding unit 19 serves as a transform scheme selection flag. Thus, unlike the first embodiment, the second embodiment eliminates the need for the output of the transform scheme selection flag 201 from the transform scheme control unit 31 to the variable length encoding unit 19. The required code volume is reduced accordingly.

### (2) Control based on the encoding mode determination signal 105

The encoding control unit 30 uses the signal 203 to direct the transform scheme control unit 31 to control the scheme in accordance with the encoding mode determination signal 105, i.e. to select the transform scheme A when the intra-coding mode is selected and select the transform scheme B when the inter-coding mode is selected. Such control enables the selection of a transform process adapted to an encoding mode. Like the quantization parameter 106 above, the encoding mode determination signal 105 included in the information 107 serves as a transform scheme selection flag. As a result, in a similar configuration as the control according to (1) based on the quantization parameter 106, it is not necessary to transmit the transform scheme selection flag 201 from the transform scheme control unit 31 to the variable length encoding unit 19. The required code volume is reduced accordingly.

### (3) Control based on the transform scheme selected in the past

The encoding control unit 30 stores a history of transform schemes selected in the past. The encoding control unit 30 uses the history information and outputs the signal 203 directing the transform scheme coding unit 31 to, for example, select a transform scheme used for a macroblock at a corresponding position in a previous frame, select a scheme for an adjacent macroblock in the same frame, select a scheme for a macroblock immediately above, or select a scheme for a macroblock immediately to the left. As a result of this control, macroblocks for which the same transform scheme is selected are sequentially arranged. Thus, occurrence of a discontinuous image signal derived from different transform schemes being used for macroblocks is prevented. Another aspect of this control is that, when the same transform coding scheme is used in succession, the transform scheme control unit 31 outputs the transform scheme selection flag 201 to the variable length coding unit 19 only when the transform scheme is changed. With this, the frequency of transmission of the transform scheme selection flag 201 to the decoding apparatus is significantly reduced. The required code volume is reduced accordingly.

### (4) Control based on the motion vector 104

The encoding control unit 30 supplies the signal 203 directing the transform scheme control unit 31 to control the transform scheme in accordance with the motion vector 104 detected by the motion estimation unit 18. The transform scheme control unit 31 may select the transform scheme A when the size of the motion vector 104 exceeds a threshold level and select the transform scheme B when the size is below the threshold level. Such control enables efficient encoding by allowing the selection of a transform scheme adapted to the characteristics of motion. Like the information 107, the motion vector 104 encoded in the variable length encoding unit 19 serves as a transform scheme selection flag, so that the required code volume is reduced accordingly.

### (5) Control based on the size of a block

As known in the art, the MPEG-4 standard for visual encoding (ISO/IEC 14496-2) provides for an Inter mode in which a motion vector is provided for each macroblock (16 pixels x 16 lines) and an Inter-4v mode in which a motion vector is provided for a block of 8 pixels x 8 lines so that a total of four motion vectors are provided for each macroblock. When the MPEG-4 visual encoding scheme is used, the encoding control unit 30 outputs the signal 203 directing the transform scheme control unit 31 to select a transform scheme in association with the Inter mode and the Inter-4v mode. Such control enables efficient encoding by allowing the selection of a transform scheme in accordance with the size of a block subject to motion-compensated prediction. Since the encoding mode determination signal 105 included in the information 107 serves as a transform scheme selection flag, the required code volume is reduced accordingly.

As described above, the second embodiment controls the selection of a transform scheme in accordance with encoding information other than the flag, including the size of a quantization parameter, the inter-coding mode/intra-coding-mode, the transform scheme used in the past, the transform scheme selected for an adjacent macroblock, the size of a motion vector, and the Inter mode/Inter-4v mode. With this, the transform scheme selection flag 201 need not be encoded or the frequency of encoding is reduced.

A combination of the first and second embodiments will be discussed. For example, in a normal operation, a transform scheme may be selected in accordance with the encoding information other than the flag but may be selected independent of the encoding information optionally. With this approach, the operation according to the second embodiment is performed for a normal operation so that the selection of a transform scheme is associated with the encoding information other than the flag and the code volume is reduced in comparison with the first embodiment in which the transform scheme selection flag is encoded without exception. When a scene change or the like occurs, resulting in lack of relation between frames, the coding efficiency may be improved by disassociating the selection of a transform scheme from the information other than the flag. In this case, the transform scheme selection flag may be encoded so that the coding efficiency is improved.

### Third embodiment

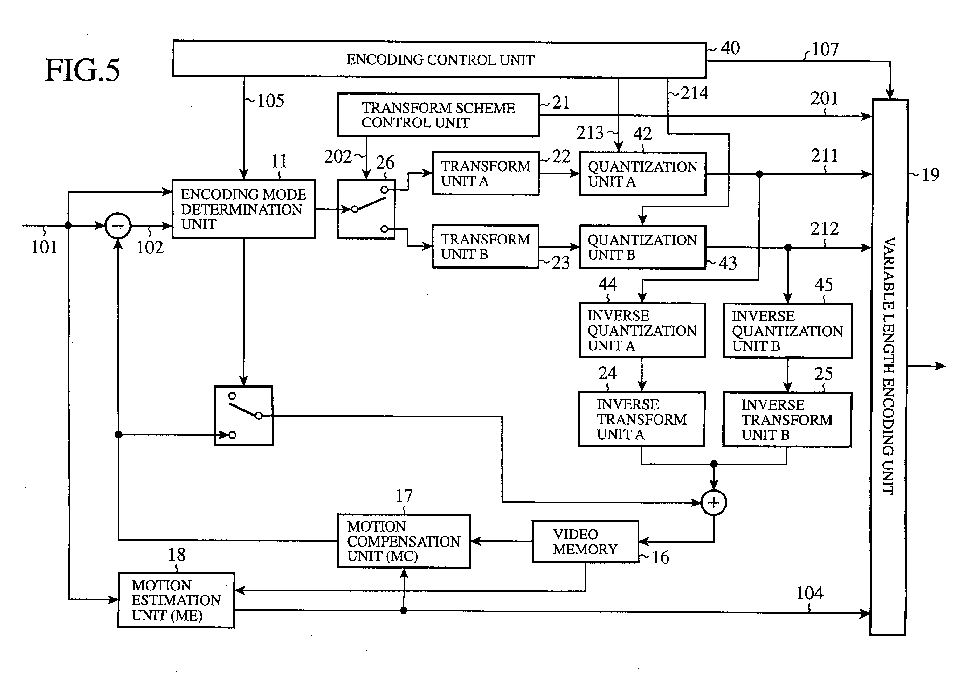

Fig. 5 is a block diagram showing a construction of an image encoding apparatus according to the third embodiment. Referring to Fig. 5, the apparatus is identical with the apparatus according to the first embodiment shown in Fig. 3 except provisions of an encoding control unit 40, two quantization units 42 and 43, two inverse quantization units 44 and 45 and elimination of the switch 27.

A description will now be given of the operation according to the third embodiment. For example, when the switch 26 selects the first transform unit A 22 in accordance with the signal 202 from the transform scheme control unit 21, the signal transformed by the first transform unit A 22 is subject to quantization adapted to the transform scheme. More specifically, the signal is quantized by the quantization unit A 42 providing a better coding efficiency and the resultant quantization coefficient 211 is output to the variable length encoding unit 19 for variable length encoding. The quantization coefficient 211 is also subject to inverse quantization in the inverse quantization unit A 44 performing the reverse of the process in the quantization unit A 42. The resultant signal is subject to inverse transform in the inverse transform unit A 24 performing the reverse of the process in the first transform unit A 22.

When the switch 26 selects the second transform unit B 23 in accordance with the signal 202 from the transform scheme control unit 21, the signal transformed by the second transform unit B 23 is quantized by the quantization unit B 43 adapted to the transform scheme and the resultant quantization coefficient 212 is output to the variable length encoding unit 19 for variable length encoding. The quantization coefficient 212 is also subject to inverse quantization in the inverse quantization unit B 45 performing the reverse of the quantization unit B 43. The resultant signal is subject to inverse transform in the inverse transform unit B 25 performing the reverse of the first transform unit B 23.

Thus, the motion picture encoding apparatus according to the third embodiment not only selects a transform scheme but also performs a quantization process adapted to the transform scheme so that the coding efficiency is further improved.

In describing the third embodiment, it has been assumed that the construction of Fig. 3 is modified. Alternatively, the construction of Fig. 4 may be modified by providing the two quantization units A 42 and B 43 corresponding to the two transform units A 22 and B23. In this case, the transform scheme control unit 21 does not output the transform scheme selection flag 201 to the variable length encoding unit 19. In a similar configuration as the construction of Fig. 4, however, the information 107 generated by the encoding control unit 10 such as the encoding mode and the quantization parameter, and the motion vector 104 detected by the motion estimation unit 108 may function as a transform scheme selection flag 201 designating the selection of a transform scheme and a quantization process adapted to the scheme. The function provided by the third embodiment may also be applied to a combination of the first and second embodiments.

### Fourth embodiment

The fourth embodiment is characterized by controlling the operation of the variable length encoding unit 19 in the apparatus according to the first through third embodiments and the aforementioned combinations of the embodiments, in accordance with the selected transform scheme.

For example, in the encoding scheme employed in the MPEG-2, the image signal received in units of blocks is subject to two-dimensional DCT. The resultant two-dimensional (horizontal and vertical) DCT coefficients are subject to quantization and variable length encoding.

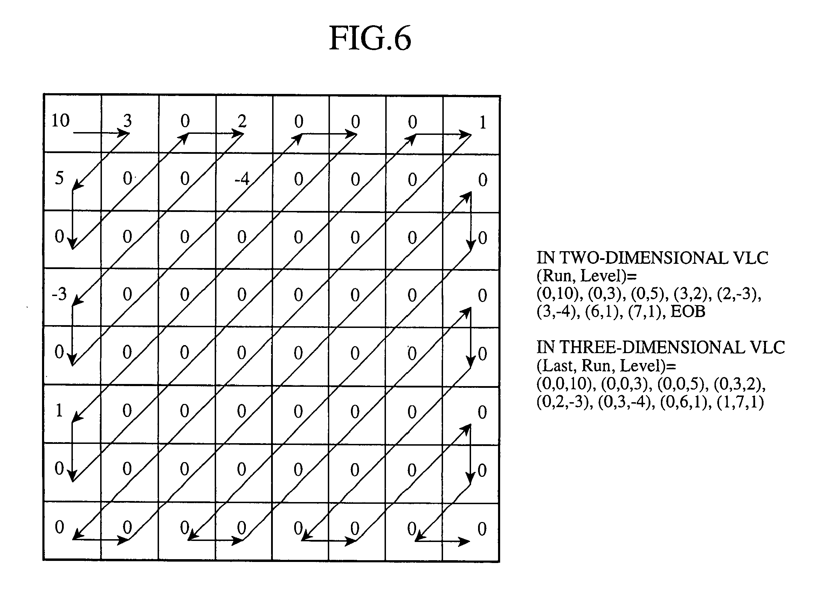

Fig. 6 shows an example of scanning performed in variable length encoding. Referring to Fig. 6, the variable length encoding orders the two-dimensional coefficients 103 using, for example, zigzag scan as indicated by arrows, thus arranging the coefficients in the first dimension. Two-dimensional variable length coding (VLC) is performed to produce a combination including the number of zeros in succession (zero runs) and non-zero coefficients (levels).

In performing the two-dimensional VLC, the variable length encoding unit 19 according to the fourth embodiment selectively uses zigzag scan, horizontal scan or vertical scan in accordance with the selected transform scheme, by referring to the transform scheme selection flag 201 from the transform scheme control unit 21, the information 107 from the encoding control unit 30, or the motion vector 104.

The variable length encoding unit 19 may switch between two-dimensional VLC codeword tables, based on the selected transform scheme. Alternatively, the variable length encoding unit 19 may selectively use, as shown in Fig. 6, the three-dimensional VLC of MPEG-4 comprising a LAST symbol (indicating that there are no subsequent non-zero coefficients) or the two-dimensional VLC employed in MPEG-2. Also, the variable length encoding unit 19 may selectively use a simple encoding process for encoding the entirety of levels or the two-dimensional VLC, in accordance with the selected transform scheme.

Thus, according to the motion picture encoding apparatus according to the fourth embodiment, the coding efficiency is further improved by selecting for operation a variable length encoding scheme adapted to the transform scheme, in addition to selecting a transform scheme. While the description given above of the first through fourth embodiments assumes that one of the two transform schemes is selected using the two transform units A 22 and B 23, selection may be made between three transform schemes.

### Fifth embodiment

In the fifth embodiment, a description will be given of a motion picture decoding apparatus for receiving and decoding data encoded by the apparatus according to the first and second embodiments or the apparatus according to the combination of the first and second embodiments.

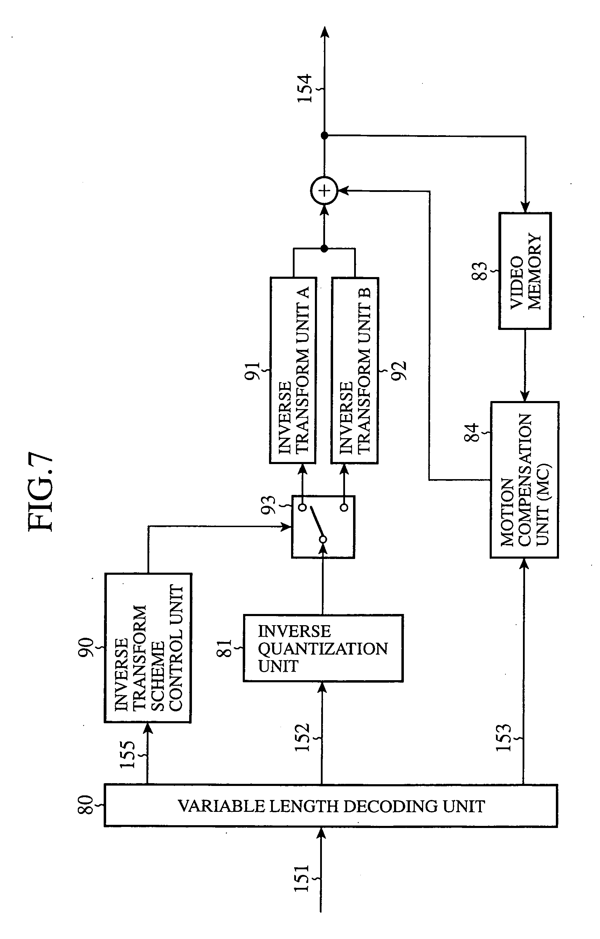

Fig. 7 is a block diagram showing a construction of a motion picture decoding apparatus according to the fifth embodiment. Referring to Fig. 7, the motion picture decoding apparatus comprises an inverse transform scheme control unit 90, a first inverse transform unit A 91, second inverse transform unit B 92 and a switch 93 for selecting one of the two inverse transform units. The other components are identical to the corresponding related-art components shown in Fig. 2. Blocks with like numerals have like functions and operate in like manners.

A description will now be given of the operation according to the fifth embodiment. When receiving the encoded data 151 generated by the motion picture encoding apparatus according to the first embodiment and including the transform scheme selection flag 155, the variable length decoding unit 80 decodes the flag 155 and outputs the decoded flag 155 to the inverse transform scheme control unit 90. The inverse transform scheme control unit 90 recognizes the transform scheme in the motion picture encoding apparatus according to the first embodiment, based on the transform scheme selection flag 155, and outputs a selection instruction for controlling the switch 93 to select an inverse transform scheme corresponding to the transform scheme employed in the motion picture encoding apparatus according to the first embodiment.

The switch 93 selects either the inverse transform unit A 91 or the inverse transform unit B 92, in accordance with the selection instruction from the inverse transform scheme control unit 90. The transform coefficient signal obtained by inverse quantization in the inverse quantization unit 81 is fed to the inverse transform unit A 91 or the inverse transform unit B 92, in accordance with the selection by the switch 93. The inverse transform unit A 91 or the inverse transform unit B 92 subjects the input transform coefficient signal to inverse transform.

Thus, according to the motion picture decoding apparatus of the fifth embodiment, the encoded data output from the motion picture encoding apparatus according to the first embodiment shown in Fig. 3 is properly decoded, by switching between inverse transform schemes in accordance with the transform scheme selection flag 155 included in the encoded data 151.

The motion picture decoding apparatus according to the fifth embodiment is adapted to the decoding of the encoded data output from the motion picture encoding apparatus according to the second embodiment. In this case, the transform scheme selection flag 155 is not input so that information included in the encoded data is utilized. The information utilized may be a signal indicating a quantization parameter, a signal indicating an inter-coding mode/intra-coding mode, motion vector data or a signal indicating the Inter mode/Inter-4v mode. Therefore, when the transform scheme selection flag 155 is not included in the encoded data 151, the variable length decoding unit 80 determines that the input encoded data 151 is output from the motion picture encoding apparatus according to the second embodiment. The variable length decoding unit 80 then outputs, as the signal 155, the signal indicating the inter-coding/intra-coding mode, the motion vector data or the signal indicating the Inter mode/Inter-4v mode, included in the encoded data 151, to the inverse transform scheme control unit 90. The inverse transform scheme control unit 90 controls the switch 93 based on the signal 155. Thus, the image signal is decoded properly according to the alternative of the fifth embodiment.

By allowing the inverse transform scheme control unit 90 to store a history of transform schemes employed in the past and select an inverse transform scheme depending on a transform scheme for a macroblock at a corresponding position in a previous frame or a transform scheme for an adjacent macroblock in the same frame, the image signal is also decoded properly.

### Sixth embodiment

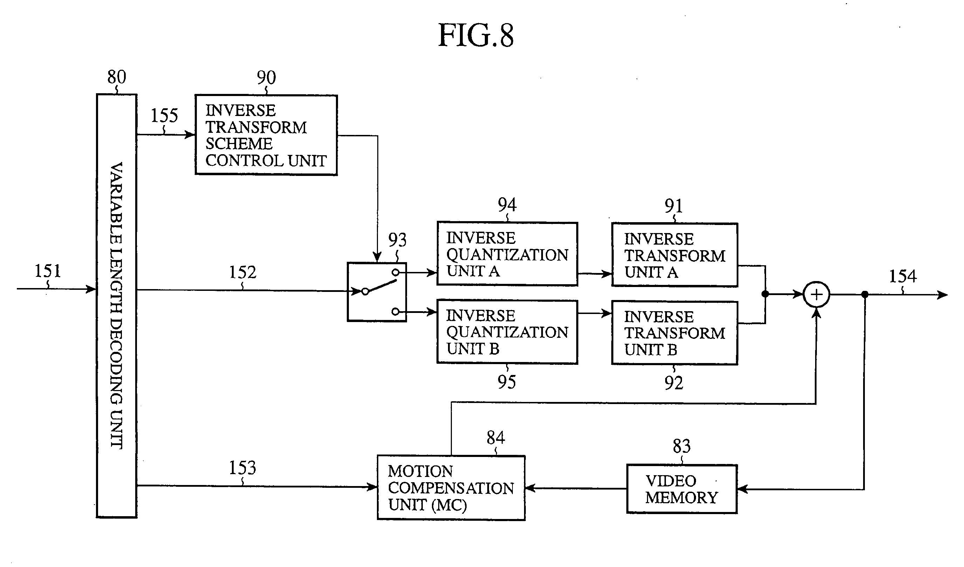

In the sixth embodiment, a description will be given of a motion picture decoding apparatus for decoding encoded data generated by the motion picture encoding apparatus according to the third embodiment or by the apparatus according to the aforementioned combinations of the embodiments. Fig. 8 is a block diagram showing a construction of a motion picture decoding apparatus according to the sixth embodiment. Referring to Fig. 8, the motion picture decoding apparatus comprises a first inverse quantization unit A 94 and a second inverse quantization unit B 95. The other components are identical to the corresponding components of the motion picture decoding apparatus according to the fifth embodiment shown in Fig. 7.

A description will now be given of the operation according to the sixth embodiment. When receiving the encoded data 151 generated by the motion picture encoding apparatus according to the third embodiment and including the transform scheme selection flag 155, the variable length decoding unit 80 decodes the transform scheme flag 155 and outputs the decoded flag 155 to the inverse transform scheme control unit 90. The inverse transform scheme control unit 90 recognizes the transform scheme in the motion picture encoding apparatus according to the third embodiment, based on the decoded transform scheme selection flag 155, and selects a mode of the switch 93 so as to select an inverse transform scheme corresponding to the transform scheme employed in the motion picture encoding apparatus.

The switch 93 selects one of the inverse transform unit A 91 and the inverse transform unit B 92 in accordance with an instruction for selection from the inverse transform control unit 90. In accordance with the selection made by the switch 93, the quantization coefficient 152 obtained by decoding in the variable length decoding unit 80 is subject to inverse quantization in the inverse quantization unit 94 and then to inverse transform in the inverse transform unit A 91. Alternatively, the coefficient is subject to inverse quantization in the inverse quantization unit B 95 and then to inverse transform in the inverse transform unit B 92.

Thus, the motion picture decoding apparatus according to the sixth embodiment is not only capable of switching between inverse transform schemes but also between inverse quantization schemes in accordance with the inverse transform scheme. Accordingly, the apparatus according to the sixth embodiment is capable of decoding the encoded data output from the motion picture encoding apparatus according to the third embodiment properly.

As already described in the fifth embodiment, the encoded data output from the motion picture encoding apparatus according to the second embodiment does not include the transform scheme selection flag 155. Instead, the signal indicating the quantization parameter or the like indicates the transform scheme. When the transform scheme selection flag 155 is not included in the encoded data 151, the variable length decoding unit 80 determines that the input encoded data 151 is output from the motion picture encoding apparatus according to the second embodiment and outputs the quantization parameter or the like included in the encoded data 151 as the signal 155 to the inverse transform scheme control unit 90. The inverse transform scheme control unit 90 enables proper decoding an image signal by controlling the switch 93 based on the signal 155. The inverse transform control unit 90 may store a history of transform schemes used in the past and decode the image signal by selecting an inverse transform scheme depending on the transform scheme for a macroblock at a corresponding position in a previous frame or the transform scheme for an adjacent macroblock in the same frame.

### Seventh embodiment

In the seventh embodiment, a description will be given of a motion picture decoding apparatus for decoding encoded data output from the motion picture encoding apparatus according to the fourth embodiment. The motion picture decoding apparatus according to the seventh embodiment is characterized by its capability to decode the encoded data output from the motion picture encoding apparatus according to the fourth embodiment properly, by controlling the operation of the variable length decoding unit 80 in accordance with the selection of the inverse transform scheme. As already described in the fourth embodiment, the motion picture encoding apparatus according to the fourth embodiment is characterized by controlling the operation of the variable length encoding unit 19 in accordance with the selected transform scheme, in the apparatus constructed according to the first through third embodiments or according to the aforementioned combinations of the embodiments.

The motion picture encoding apparatus according to the fourth embodiment may change the order of scanning, selectively use the variable length decoding table, or selectively use the two-dimensional VLC or the three-dimensional VLC, based on the transform scheme selection flag 201 from the transform scheme control unit 21, the information 107 from the encoding control unit 30 or the motion vector 104. Therefore, when the data encoded by the motion picture encoding apparatus according to the fourth embodiment is input, the motion picture decoding apparatus according to the seventh embodiment recognizes the transform scheme selected in the motion picture encoding apparatus and the variable length encoding scheme in the variable length encoding unit 19, by referring to the transform scheme selection flag 201 from the transform scheme control unit 21, the information 107 from the encoding control unit 30 or the like, so as to perform the corresponding variable length decoding and the reverse of the transform selected in the encoding apparatus.

The motion picture decoding apparatus according to the seventh embodiment is adapted to switch between variable length decoding schemes as well as between inverse transform schemes so that the encoded data output from the motion picture encoding apparatus according to the fourth embodiment is properly decoded.

Given below is an additional explanation and the description of variations of the invention according to the first through seventh embodiments.

The description of the first through seventh embodiment assumes that the first and second transform schemes implemented by the two transform units A 22 and B 23 are employed. Alternatively, three or more transform schemes may be used. An example of a combination of transform schemes is as follows. When the transform scheme as described below is employed in the motion picture encoding apparatus according to the first through fourth embodiments, the reverse of the transform scheme employed in the motion picture encoding apparatus is employed in the motion picture decoding apparatus according to the fifth through seventh embodiments.

The DCT transform scheme employed in MPEG imposes a relatively heavy processing load and involves the likelihood of operation errors being generated, since the scheme requires real number operations. The DCT transform scheme, however, is generally adapted to the characteristics of an image signal and enables an efficient encoding process. The Hadamard transform scheme reduces the processing load significantly since the scheme only comprises coefficients of +1 and -1 and requires only integer operations. The Hadamard transform scheme also does not generate operation errors and enables reversible (lossless) encoding capable of complete restoration of an image. For these reasons, the Hadamard transform scheme may be selected for a high bit rate requiring a reversible encoding. The DCT transform scheme may be selected for a low bit rate not requiring a reversible encoding. This enables an encoding adapted to the bit rate, resulting in flexible and highly efficient encoding and decoding processes.

There is also known a transform scheme called the slant transform capable of describing a low-frequency signal using a linear function. Therefore, the slant transform may be selected for a portion of an image with smooth transition. With this, coding noise such as pseudo edges is prevented from being created so that the coding efficiency is improved.

By switching between transform schemes depending on the characteristics of an image signal, the coding efficiency is improved. According to another variation, a transform scheme requiring relatively complex operations such as real number operations and multiplication may be used in combination with a transform scheme requiring only simple operations such as addition and subtraction so that these transform schemes may be used selectively depending on the processing capability of the motion picture encoding apparatus and the motion picture decoding apparatus. When a terminal with a relatively low processing capability is used, or when real-time processing is strongly required, a transform scheme using simple operations may be selected. When a terminal with a relatively high processing capability is used, or when none real-time processing is permitted, a transform scheme using complete operations may be selected.

When an image signal is encoded in hierarchies, a transform scheme may advantageously be selected for each of the hierarchies. By retrieving DC components of the coefficients produced in the intra-coding mode, an image with a relatively small size may be formed. In hierarchical coding, the coding efficiency is improved by subjecting such a small image to a transform a second time. When collecting DC components of the transform coefficients produced in the intra-coding mode to form blocks and then subjecting the blocks to additional transform and quantization, different encoding schemes and/or quantization schemes may be used for a first time and for a second time. By using different combination of schemes for respective layer and operating the apparatus accordingly, the coding efficiency is improved.

In describing the first through fourth embodiments, it is assumed that the signal input to the transform units A22 and B23 is either the input image signal 101 or the prediction error signal 102. Alternatively, the input image signal or the prediction error signal processed according to the differential pulse code modulation (DPCM) technique for pixel-by-pixel prediction may be used, or the signal having average components (DC components) removed may be used.

Further improvement may be obtained in the motion picture encoding apparatus according to the first through fourth embodiments, by selectively using different base sizes for transform (block size subject to a transform process) in addition to selectively using different transform schemes. For example, when a relatively large size of a block such as a 8 x 8 block or a 16 x 16 block is subject to a transform process, DCT may be selected so as to benefit from a high coding efficiency. When a relatively small size of a block such as a 4 x 4 block is subject to a transform process, other transform schemes including the Hadamard transform scheme may be selected.

In describing the motion picture encoding apparatus according to the third embodiment and the motion picture decoding apparatus according to the sixth embodiment, the transform unit and the quantization unit are described as being separate units, and the inverse quantization unit and the inverse transform unit are described as being separate units. Alternatively, vector quantization for dealing with quantization and transform in a single process and inverse vector quantization for dealing with inverse quantization and inverse transform in a single process may be used to achieve the same result. For example, DCT and linear quantization may be used as the first transform scheme and the first quantization scheme, respectively, and vector quantization may be used as the second transform scheme and the second quantization scheme.

### Industrial Applicability

An extensive range of applications including transmission and reception, recording and reproduction of digital images will be found for the motion picture encoding apparatus and the motion picture decoding apparatus according to the invention since they provide optimal processing capabilities for compressing and expanding a motion picture signal without damaging image quality and in a flexible manner.

## Claims

1. A motion picture encoding apparatus for producing encoded data by compressing a motion picture signal, comprising:
a plurality of transform units for different transform schemes for encoding the motion picture signal; and
a transform scheme control unit for selecting, from said plurality of transform units, the transform unit for the transform scheme adapted to the motion picture signal.

2. A motion picture decoding apparatus for decoding compressed, encoded data to restore a motion picture signal, comprising:
a plurality of inverse transform units for decoding the motion picture signal using different transform schemes; and
an inverse transform scheme control unit for selecting, from said plurality of inverse transform units, the inverse transform unit for the transform scheme adapted to the motion picture signal subject to decoding, in accordance with the encoded data.

3. The motion picture encoding apparatus according to claim 1, further comprising:
a variable length encoding unit for including, in the encoded data, a flag indicating the transform scheme of the selected transform unit.

4. The motion picture decoding apparatus according to claim 2, further comprising:
a variable length decoding unit for retrieving, from the encoded data, a flag for selection of the transform scheme, wherein
said inverse transform scheme control unit selects, from said plurality of inverse transform units, the inverse transform unit for the transform scheme adapted to the motion picture signal subject to decoding, in accordance with the retrieved flag.

5. The motion picture encoding apparatus according to claim 1, wherein said transform scheme control unit stores a history of transform schemes selected in the past and selects, from said plurality of transform units, the transform unit for the transform scheme adapted to the motion picture signal, in accordance with the history.

6. The motion picture decoding apparatus according to claim 2, wherein said inverse transform scheme control unit stores a history of transform schemes selected in the past and selects, from said plurality of inverse transform units, the inverse transform unit for the transform scheme adapted to the motion picture signal subject to decoding, in accordance with the history.

7. The motion picture encoding apparatus according to claim 1, further comprising:
a quantization unit for a quantization process adapted to the selected transform unit; and
a variable length encoding unit for including, in the encoded data, a flag indicating the transform scheme of the selected transform unit.

8. The motion picture decoding apparatus according to claim 2, further comprising:
a variable length decoding unit for retrieving, from the encoded data, a flag for selection of the transform scheme; and
a plurality of inverse quantization units, wherein
said inverse transform scheme control unit selects, from said plurality of inverse quantization units, the inverse quantization unit adapted to the motion picture signal subject to decoding, in accordance with the retrieved flag.

9. The motion picture encoding apparatus according to claim 1, further comprising:
a variable length encoding unit for including, in the encoded data, a flag indicating the transform scheme of the selected transform unit and for performing a variable length encoding process adapted for the selected transform scheme.

10. The motion picture decoding apparatus according to claim 2, further comprising:
a variable length decoding unit for retrieving, from the encoded data, a flag for selection of the transform scheme and for performing a variable length decoding process adapted for the retrieved flag.
